# EUROPÄISCHE PATENTSCHRIFT

(11) **EP 1 524 240 B1**
(45) Veröffentlichungstag und Bekanntmachung des Hinweises auf die Patenterteilung: **29.02.2012**
(21) Anmeldenummer: 04014671.4
(22) Anmeldetag: 23.06.2004
(51) Int. Cl.: C01B 3/32

(54) **Verdampferanordnung zur Erzeugung eines in einem Reformer zur Wasserstoffgewinnung zersetzbaren Kohlenwasserstoff/Wasserdampfgemisches**
Evaporator for the production of a hydrocarbon/steam mixture degradable in a reformer for hydrogen production
Dispositif d' évaporation pour la production d' un mélange dégradable d' hydrocarbone/vapeur pour la production d' hydrogène dans un réformeur

(30) Priorität: 15.10.2003 DE 10348638
(43) Veröffentlichungstag der Anmeldung: 20.04.2005
(73) Patentinhaber: J. Eberspächer GmbH & Co. KG, 73730 Esslingen (DE)
(72) Erfinder: Kaupert, Andreas, 89073 Ulm (DE); Eberspach, Günter, 72649 Wolfschlugen (DE)

(56) Entgegenhaltungen:
- EP-A- 1 354 852
- WO-A-03/101890
- US-A- 5 617 995
- US-A- 6 058 856

## Beschreibung

Die vorliegende Erfindung betrifft eine Verdampferanordnung zur Erzeugung eines in einem Reformer zur Wasserstoffgewinnung zersetzbaren Kohlenwasserstoff/Wasserdampf-Gemisches nach dem Oberbegriff von Anspruch 1.

Reformer werden dazu eingesetzt, in einer katalytischen Reaktion Kohlenwasserstoffe oder kohlenwasserstoffhaltige Materialien aufzuspalten und dabei Wasserstoff freizusetzen bzw. zu gewinnen. Dieser Wasserstoff kann beispielsweise in Brennstoffzellen zur Erzeugung elektrischer Energie genutzt werden, oder kann in einem Abgasführungssystem einer Brennkraftmaschine zur Abgasaufbereitung genutzt werden.

Aus der JP 04 064802 A ist eine gattungsgemäße Verdampferanordnung bekannt, bei der das poröse Verdampfermedium die Funktion der Wasserdampferzeugungseinrichtung und der Wasserdampf-Eintrittsöffnungsanordnung umfasst.

Die WO 03/101890 betrifft eine Verdampferanordnung, bei der die Wasserdampf-Eintrittsöffnungsanordnung vom porösen Medium gebildet wird.

Die durch die GB 185 476 A offenbarte Verdampferanordnung eines Brenners weist in dem die Misch-Kammer umgebenden Wandungsbereich das Verdampfermedium auf.

Es ist die Aufgabe der vorliegenden Erfindung, eine gattungsgemäße Verdampferanordnung vorzusehen, die bei einfachem Aufbau in zuverlässiger Art und Weise ein zur Reformaterzeugung geeignetes Gemisch bereitstellen kann.

Erfindungsgemäß wird diese Aufgabe durch eine Verdampferanordnung zur Erzeugung eines in einem Reformer zur Wasserstoffgewinnung zersetzbaren Kohlenwasserstoff/Wasserdampf-Gemisches mit den Merkmalen in Anspruch 1 gelöst.

Durch das Bereitstellen einer speziell zur Kohlenwasserstoffverdampfung vorgesehenen oder ausgebildeten Heizeinrichtung kann dafür gesorgt werden, dass auch bei vergleichsweise niedrigen Umgebungstemperaturen der Kohlenwasserstoff, der zur Reformaterzeugung erforderlich ist, in zuverlässiger Art und Weise verdampft wird und sich mit dem in die Misch-Kammer eingeleiteten Wasserdampf zur Bildung des einem Reformer zuzuführenden Gemisches vermischen kann.

Bei der erfindungsgemäßen Anordnung kann beispielsweise vorgesehen sein, dass die Kohlenwasserstoffverdampfungseinrichtung in einem Bodenbereich der Misch-Kammer angeordnet ist. Weiter ist die Eintrittsöffnungsanordnung in einem die Misch-Kammer umgebenden Wandungsbereich ausgebildet.

Die erste Heizeinrichtung ist elektrisch betreibbar.

Gemäß einem weiteren vorteilhaften Aspekt kann eine zweite Heizeinrichtung vorgesehen sein zur Erwärmung einer die Misch-Kammer umgebenden Wandung oder/und einer in Strömungsrichtung an die Misch-Kammer anschließenden Wandung.

Da beispielsweise in einer Brennstoffzelle oder auch einem Abgasführungssystem einer Brennkraftmaschine in verschiedenen Bereichen sehr hohe Temperaturen vorliegen, wird gemäß einem weiteren Aspekt der vorliegenden Erfindung vorgeschlagen, dass die zweite Heizeinrichtung eine von erwärmtem Fluid durchströmbare Wärmetauscheranordnung umfasst. Das angesprochene erwärmte Fluid kann dann in denjenigen Bereichen erwärmt werden, in denen beispielsweise durch Ablaufen exothermer Reaktionen hohe Temperaturen auftreten.

Alternativ oder zusätzlich ist es möglich, dass die zweite Heizeinrichtung ein elektrisch betreibbares Heizelement umfasst.

Bei der erfindungsgemäßen Verdampferanordnung kann weiter vorgesehen sein, dass die Wasserdampferzeugungsanordnung eine Wärmequelle und eine Wärmetauscheranordnung zur Übertragung von Wärme von der Wärmequelle auf zu verdampfendes Wasser umfasst. Diese Wärmequelle kann beispielsweise das in einer Reformeranordnung erzeugte Reformat umfassen. Da bei Ablauf einer katalytischen Reaktion in einem Reformer zur Umsetzung eines Kohlenwasserstoff/Wasserdampf-Gemisches im Allgemeinen eine exotherme Reaktion abläuft, bei welcher vergleichsweise hohe Temperaturen entstehen, weist das einen derartigen Reformer verlassende Reformat ebenfalls eine vergleichsweise hohe Temperatur auf, die durch entsprechenden Wärmeübertrag dazu genutzt werden kann, Wasser zu erwärmen, um den in die Verdampferanordnung einzuleitenden Wasserdampf zu erzeugen.

Da die Reformaterzeugung jedoch erst starten kann, wenn bereits ein als Ausgangsstoff dazu dienendes Gemisch aus Kohlenwasserstoffdampf und Wasserdampf vorhanden ist, wird gemäß einem weiteren Aspekt der vorliegenden Erfindung vorgeschlagen, dass die Wärmequelle eine Brenneranordnung umfasst. In dieser Brenneranordnung kann also zumindest in einer Startphase des Reformierungsvorgangs die Wärme bereitgestellt werden, mit welcher Wasser in Wasserdampf umgewandelt werden kann. Dabei kann beispielsweise vorgesehen sein, dass die Brenneranordnung zur Aufnahme und Verbrennung von eine Brennstoffzelle verlassenden und Restwasserstoff enthaltenden Abgasen oder/und flüssigem oder gasförmigem Brennstoff ausgebildet ist. Auf diese Art und Weise kann bei bereits laufendem Reformierungsvorgang und bei unter Einsatz des dabei erzeugten Wasserstoffs betriebener Brennstoffzelle das die Brennstoffzelle verlassende Restreformat bzw. Abgas, das immer noch einen gewissen Anteil an Restwasserstoff enthält, effizient zur Wärmeerzeugung genutzt werden.

Ferner betrifft die vorliegende Erfindung ein Reformersystem zur Gewinnung von Wasserstoff aus einem Kohlenwasserstoff/Wasserdampf-Gemisch, umfassend eine erfindungsgemäße Verdampferanordnung.

Da zum Start der katalytischen Reaktion (Dampfreformierung), die im Allgemeinen in einem Reformer abläuft, vergleichsweise hohe Temperaturen von beispielsweise mehr als 300°C erforderlich sind, wird gemäß einem weiteren Aspekt der vorliegenden Erfindung vorgeschlagen, dass eine zur Vorwärmung eines Reformers oder/und einer Brennstoffzelle ausgebildete Heizanordnung vorgesehen ist. Diese Heizanordnung kann beispielsweise die vorangehend angesprochene Brenneranordnung umfassen, die im Betrieb des Gesamtsystems dann auch oder zum Teil die zum Verdampfen von Wasser zur Wasserdampferzeugung erforderliche Wärme bereitstellen kann.

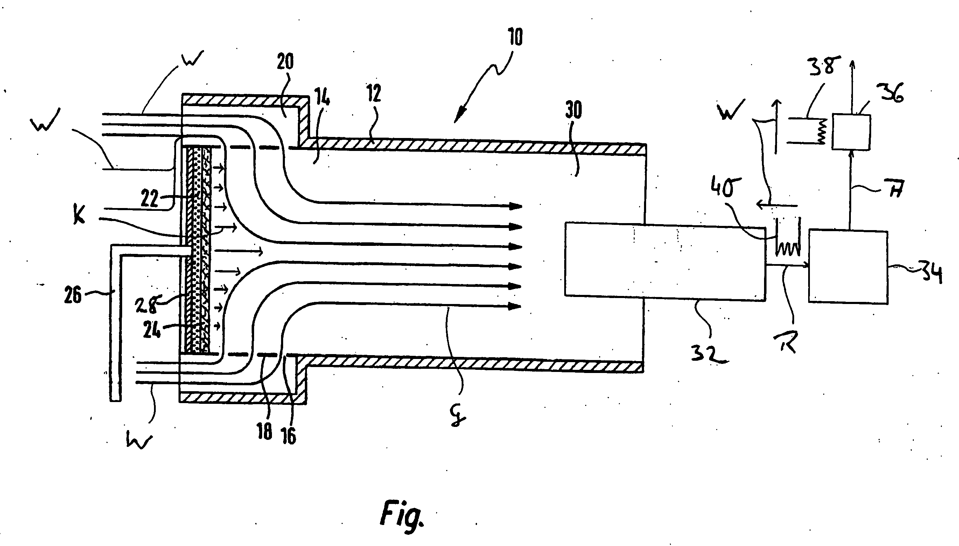

Die vorliegende Erfindung wird nachfolgend mit Bezug auf die beiliegende Zeichnung detailliert beschrieben, die eine erfindungsgemäße Verdampferanordnung im Prinzip-Längsschnitt zeigt.

In der Figur ist eine erfindungsgemäße Verdampferanordnung allgemein mit 10 bezeichnet. Die Verdampferanordnung 10 umfasst eine langgestreckte, röhrenartige Gehäuseanordnung 12, in welcher, wie im Folgenden beschrieben, ein Gemisch G aus verdampftem Brennstoff K, beispielsweise Dieselbrennstoff oder Benzin, und Wasserdampf W gebildet wird. Auch können hier nicht fossile flüssige Brennstoffe, wie z.B. Biodiesel, zum Einsatz gelangen. In dem Gehäuse 12 ist dazu eine Misch-Kammer 14 vorgesehen, welcher über eine Mehrzahl von Eintrittsöffnungen 16 in einer Außenumfangswand 18 der Wasserdampf W aus einem radial äußeren, ringartigen Raum 20 zugeführt wird. An einem Bodenbereich 22 der Misch-Kammer 14 ist ein poröses Verdampfermedium 24 vorgesehen, welches beispielsweise durch Vliesmaterial oder sonstiges Gewebe oder mattenartiges Material, Schaumkeramik oder dergleichen gebildet sein kann. Eine Brennstoffzuführleitung 26 führt durch den Bodenbereich 22 hindurch und leitet den zu verdampfenden Brennstoff in das poröse Verdampfermedium 24 ein. Das durch Wasserdampfzufuhr einerseits und durch Brennstoffverdampfung andererseits in der Misch-Kammer 14 gebildete Brennstoff/Wasserdampf-Gemisch G, welches auch als Kohlenwasserstoff/Wasserdampf-Gemisch G betrachtet werden kann, verlässt die Misch-Kammer 14 und tritt in einen Volumenbereich 30 ein, in welchem das in der Figur nicht dargestellte Katalysatormaterial eines schematisch angedeuteten Reformers 32 angeordnet sein kann. Das aus der Misch-Kammer 14 austretende und auf den Katalysator zu strömende Gemisch G wird am Katalysator durch katalytische Reaktion aufgespalten, um ein Wasserstoff enthaltendes Reformat zu gewinnen. Dieser Wasserstoff kann dann weiter verwendet werden, beispielsweise in einer Brennstoffzelle 34 zur Erzeugung elektrischer Energie oder in einem Abgasführungssystem einer Brennkraftmaschine zur Abgasreinigung.

In der Brennstoffzelle 34 wird das Reformat R dann unter Erzeugung elektrischer Energie umgesetzt, wobei jedoch die die Brennstoffzelle 34 verlassenden Abgase A, die auch als Restreformat bezeichnet werden können, noch einen bestimmten Restwasserstoffanteil enthalten werden. Um das gesamte System möglichst effizient betreiben zu können, werden diese Abgase einem Brenner 36 zugeleitet, wo sie verbrannt werden. Die dabei entstehende Wärme kann in einer nur schematisch angedeuteten Wärmetauscheranordnung 38 aufgenommen werden und wie nachfolgend beschrieben weiter genutzt werden. Die Brenneranordnung 36 kann weiterhin dazu ausgebildet sein, anderen Brennstoff, also beispielsweise flüssigen fossilen Brennstoff, wie z.B. Diesel oder Benzin, oder gasförmigen Brennstoff, aufzunehmen, um diesen zur Wärmeerzeugung zu verbrennen. Dieses Charakteristikum der Brenneranordnung 36 ist insbesondere daher von Bedeutung, da im Bereich des Reformers 32 bzw. auch der Brennstoffzelle 34 zum Starten der dort jeweils ablaufenden Reaktionen vergleichsweise hohe Temperaturen von über 300°C bis 600°C erforderlich sein können. Das heißt, in einer Startphase oder vor einer Startphase ist es zunächst erforderlich, beispielsweise den Reformer 32 auf eine ausreichende hohe Temperatur zu bringen. Dies kann unter Einsatz der Brenneranordnung 36 dadurch geschehen, dass diese zunächst ihr zugeleiteten Brennstoff verbrennt und die dabei erzeugte Wärme genutzt wird, um den Reformer 32 bzw. das darin enthaltene Katalysatormaterial vorzuwärmen. Dies kann dadurch geschehen, dass die die Brenneranordnung 36 verlassenden sehr heißen Gase in die Misch-Kammer 14 eingeleitet und durch den Reformer 32 und ggf. auch die Brennstoffzelle 34 hindurch geleitet werden, um eine sehr intensive primärseitige Erwärmung des Katalysatormaterials vorzusehen. Auch ist es möglich, mit den Verbrennungsabgasen des Brenners 36 den Reformer 32 oder/und die Brennstoffzelle 34 zu umströmen, um dadurch die gewünschte Erwärmung vorzusehen. Weiterhin ist es möglich, in der Wärmetauscheranordnung 38 die in der Brenneranordnung 36 erzeugte Wärme auf ein Wärmeträgermedium, beispielsweise Wasser oder dergleichen, zu übertragen, um damit bei entsprechender Durchströmung des Reformers 36 bzw. der Brennstoffzelle 34 diese zum Starten des Betriebs zu konditionieren. Die bei dem Reformierungsvorgang ablaufende Reaktion ist eine endotherme Reaktion, d.h. eine Reaktion, zu deren Aufrechterhaltung Energie, beispielsweise in Form von Wärmeenergie, zugeführt werden muss. Dies bedeutet, dass auch während des Ablaufs des Reformierungsvorgangs zum Aufrechterhalten desselben im vorliegenden Falle dem Reformer 32 Wärme zugeführt werden muss, um die erforderliche Temperatur von bis zu 600°C beizubehalten. Auch dies kann unter Einsatz der Brenneranordnung 36 erfolgen, die bei ablaufendem Reformierungsvorgang und beispielsweise auch betriebener Brennstoffzelle 34 dann die Abgase A der Brennstoffzelle 34 verbrennt, um die dabei erzeugte Wärme dann zum Reformer 32 zu leiten. Es sei hier angeführt, dass die Brenneranordnung 36 auch einen katalytischen Brennerbereich umfassen kann, um insbesondere bei der Verbrennung der Abgase A der Brennstoffzelle 34 in einer katalytischen Reaktion diese bzw. den darin enthaltenen Restwasserstoff zu verbrennen und die dabei entstehende Wärme nutzen zu können. Ein derartiger katalytischer Brennerbereich kann dann gekoppelt sein mit einem Brennerbereich, in dem andere Brennstoffe, wie z.B. flüssige oder gasförmige fossile oder nicht fossile kohlenwasserstoffhaltige Brennstoffe verbrannt werden.

Sind die Brennstoffzelle 34 und der Reformer 32 auf der gewünschten Temperatur, so kann dann der Reformierungsprozess gestartet werden. Dazu wird, wie bereits angesprochen, flüssiger Brennstoff über die Brennstoffzuführleitung 26 in das Verdampfermedium 24 eingeleitet. Um die Abdampfung dieses Brennstoffs als Kohlenwasserstoffdampf K zu verstärken bzw. zu unterstützen, ist dem Verdampfermedium 24 eine Heizeinrichtung 28 zugeordnet. Diese ist vorzugsweise elektrisch betreibbar und umfasst beispielsweise eine Heizspirale oder dergleichen, die im dargestellten Beispiel an der von der Misch-Kammer 14 abgewandten Seite des Bodenbereichs 22 liegt. Selbstverständlich ist es auch möglich, diese Heizeinrichtung 28 zwischen dem Bodenbereich 22 und dem porösen Verdampfermedium 24 zu positionieren, um einen noch effizienteren Wärmeeintrag in dieses poröse Verdampfermedium zu erlangen. Durch Erregung der Heizeinrichtung 28 kann also die Temperatur im Bereich des porösen Verdampfermediums 24 erhöht werden, so dass dort das Abdampfen des über die Leitung 26 zugeführten Brennstoffs verstärkt auftreten wird.

Zusammen mit dem Kohlenwasserstoffdampf K, der durch Erregen der Heizeinrichtung 28 verstärkt in die Misch-Kammer 14 gelangt, wird Wasserdampf W, wie bereits ausgeführt, in die Misch-Kammer 14 eingeleitet. Vor Einleitung in die Misch-Kammer 14 kann dafür gesorgt werden, dass der bei vergleichsweise hoher Temperatur zugeführte Wasserdampf W den Bodenbereich 22 an seiner von der Misch-Kammer 14 abgewandten Seite umströmt, so dass die im Wasserdampf W transportierte Wärme zusätzlich zur Erwärmung des Bodenbereichs 28 und damit des Verdampfermediums 24 genutzt werden kann und die zur Brennstoffabdampfung bereitzustellende Heizleistung der Heizeinrichtung 28 gemindert werden kann. Dabei sollte jedoch dafür gesorgt werden, dass zum Vermeiden einer zu frühzeitigen Brennstoffverdampfung der Wasserdampf W die Brennstoffzuführleitung 26 nicht umströmen kann. Hier kann beispielsweise eine Isolierung oder dergleichen für diese Brennstoffzuführleitung 26 vorgesehen sein.

Das in der Misch-Kammer 14 gebildete Gemisch G aus Brennstoffdampf bzw. Kohlenwasserstoffdampf K und Wasserdampf W strömt in Richtung auf den thermisch bereits konditionierten Reformer 32 zu und wird dann durch die im Reformer 32 ablaufende Reaktion in das Reformat R umgesetzt. Da diese Reaktion bei vergleichsweise hohen Temperaturen abläuft bzw. zur Entstehung entsprechend hoher Temperaturen im Bereich des Reformers 32 beiträgt, wird auch das Reformat R, das den Reformer 32 in Richtung Brennstoffzelle 34 verlässt, eine sehr hohe Temperatur aufweisen. Die somit im Reformat transportierte Wärme kann dazu genutzt werden, in einer weiteren Wärmetauscheranordnung 40 alternativ oder zusätzlich zur Wärmetauscheranordnung 38 Wärme auf Wasser zu übertragen, um dieses zu verdampfen und als Wasserdampf W in die Misch-Kammer 14 einleiten zu können. Wie vorangehend bereits beschrieben, kann gleichwohl aber das die Brennstoffzelle 34 in Richtung Brenneranordnung 36 verlassende und noch Restwasserstoff transportierende Abgas A im Brenner 36 dann zur Erzeugung von Wärme verbrannt werden, um auch diese Wärme oder zumindest einen Teil davon in der Wärmetauscheranordnung 38 dazu zu nutzen, Wasser zu verdampfen. Dies ist insbesondere daher möglich, da in dieser Phase der Reformaterzeugung im Allgemeinen keine zusätzliche Erwärmung des Reformers 32 erforderlich ist. Sollte dies dennoch erforderlich sein, so könnte beispielsweise die in der Wärmetauscheranordnung 40 bereitgestellte Wärme auf das Wasser zur Erzeugung des Wasserdampfs W übertragen werden, während die in der Wärmetauscheranordnung 38 bereitgestellte Wärme oder die in den die Brenneranordnung 36 verlassenden Abgasen transportierte Wärme zur Erwärmung des Reformers 32 oder/und der Brennstoffzelle 34 genutzt werden kann.

Um im Reformierungsbetrieb bzw. auch im Brennstoffzellenbetrieb die Effizienz des Gesamtsystems weiter erhöhen zu können, kann es vorteilhaft sein, einen Teil des im Reformer 32 erzeugten Reformats R vor Einleitung in die Brennstoffzelle 34 abzuzweigen und diesen abgezweigten Anteil in die Misch-Kammer 14 einzuleiten, so dass das dem Reformer 32 zugeleitete Gemisch G bereits einen gewissen Anteil an Reformat enthält. Insbesondere wenn dieses Reformat zuvor in der Wärmetauscheranordnung 40 gekühlt worden ist, kann auf diese Art und Weise dafür gesorgt werden, dass der in dem Reformat transportierte und bei der Reformierungsreaktion nicht zu Wasserstoff umgesetzte Wasserdampf erneut in den Reformer 32 eingespeist wird und somit die Effizienz bei der Wasserstofferzeugung erhöht werden kann. Auch ein Teil der die Brennstoffzelle 34 verlassenden Abgase A oder er die Brenneranordnung 36 verlassenden Abgase kann in die Misch-Kammer 14 zur Vermischung mit dem Wasserdampf W und dem Kohlenwasserstoffdampf K eingeleitet werden.

Es sei darauf hingewiesen, dass das in der Figur dargestellte System in verschiedenen Bereichen variiert werden kann. Anstelle der zwischen den Abgasen A und einem anderen beispielsweise fossilen Brennstoff umschaltbaren Brenneranordnung 36 oder zusätzlich zu dieser die Abgase A aufnehmenden Brenneranordnung 36 kann ein weiterer Brenner vorgesehen sein, der zur Erwärmung des Reformers 32 dann beispielsweise fossilen oder gasartigen Brennstoff aufnimmt, um durch Verbrennung die erforderlichen Temperaturen bereitstellen zu können. Auch könnte grundsätzlich daran gedacht werden, dem Reformer 32 bzw. dem Katalysatormaterial desselben eine elektrisch betreibbare Heizeinrichtung zuzuordnen, um insbesondere in der Startphase das Katalysatormaterial auf die gewünschte Temperatur bringen zu können.

## Patentansprüche

1. Verdampferanordnung zur Erzeugung eines in einem Reformer zur Wasserstoffgewinnung zersetzbaren Kohlenwasserstoff/Wasserdampf-Gemisches, umfassend einen Verdampfer-Bereich, welcher aufweist:
- eine Wasserdampferzeugungseinrichtung (32, R, 36, 38, 40),
- eine Misch-Kammer (14) mit einer Wasserdampf-Eintrittsöffnungsanordnung (16)
- eine Kohlenwasserstoffverdampfungseinrichtung (24, 28), umfassend ein poröses Verdampfermedium (24) und diesem zugeordnet eine erste Heizeinrichtung (28), **dadurch gekennzeichnet, dass** die Wasserdampf-Eintrittsoffnungsanordnung (16) von der Kohlenwasserstoffverdampfungseinrichtung (24, 28) getrennt und in einem die Misch-Kammer (14) umgebenden Wandungsbereich (18) ausgebildet ist und dass die erste Heizeinrichtung (28) elektrisch betreibbar ist.

2. Verdampferanordnung nach Anspruch 1,
**dadurch gekennzeichnet, dass** die Kohlenwasserstoffverdampfungseinrichtung (24, 34) in einem Bodenbereich (22) der Misch-Kammer (14) angeordnet ist.

3. Verdampferanordnung nach einem der Ansprüche 1 bis 2,
**gekennzeichnet durch** eine zweite Heizeinrichtung zur Erwärmung einer die Misch-Kammer (14) umgebenden Wandung oder/und einer in Strömungsrichtung an die Misch-Kammer (14) anschließenden Wandung.

4. Verdampferanordnung nach Anspruch 3,
**dadurch gekennzeichnet, dass** die zweite Heizeinrichtung eine von erwärmtem Fluid durchströmbare Wärmetauscheranornung oder/und ein elektrisch betreibbares Heizelement umfasst.

5. Verdampferanordnung nach einem der Ansprüche 1 bis 4,
**dadurch gekennzeichnet, dass** die Wasserdampferzeugungsanordnung (32, R, 36, 38, 40) eine Wärmequelle (36, 32, R) und eine Wärmetauscheranordnung (38, 40) zur Übertragung von Wärme von der Wärmequelle (36, 32, R) auf zu verdampfendes Wasser umfasst.

6. Verdampferanordnung nach Anspruch 5,
**dadurch gekennzeichnet, dass** die Wärmequelle eine Brenneranordnung (36) umfasst.

7. Verdampferanordnung nach Anspruch 6,
**dadurch gekennzeichnet, dass** die Brenneranordnung (36) zur Aufnahme und Verbrennung von eine Brennstoffzelle (34) verlassenden und Restwasserstoff enthaltenden Abgasen (A) oder/und flüssigem oder gasförmigem Brennstoff ausgebildet ist.

8. Reformersystem zur Gewinnung von Wasserstoff aus einem Kohlenwasserstoff/Wasserdampf-Gemisch, umfassend eine Verdampferanordnung nach einem der Ansprüche 1 bis 7.

9. Reformersystem nach Anspruch 8,
**dadurch gekennzeichnet, dass** eine zur Vorwärmung eines Reformers (32) oder/und einer Brennstoffzelle (34) ausgebildete Heizanordnung (36) vorgesehen ist.

10. Reformersystem nach Anspruch 9,
**dadurch gekennzeichnet, dass** die Heizanordnung (36) die Brenneranordnung (36) umfasst und
die Wärmequelle eine Brenneranordnung (36) umfasst.

11. Reformersystem nach Anspruch 9
**dadurch gekennzeichnet, dass** die Heizanordnung (36) die Brenneranordnung (36) umfasst und
dass die Brenneranordnung (36) zur Aufnahme und Verbrennung von eine Brennstoffzelle (34) verlassenden und Restwasserstoff enthaltenden Abgasen (A) oder/und flüssigem oder gasförmigem Brennstoff ausgebildet ist.

## Claims

1. Evaporator arrangement for generating a hydrocarbon/steam mixture decomposable in a reformer for hydrogen production, comprising an evaporator region which has:
- a steam generation device (32, R, 36, 38, 40),
- a mixing chamber (14) with a steam inlet port arrangement (16),
- a hydrocarbon evaporation device (24, 28), comprising a porous evaporator medium (24) and, assigned to this, a first heating device (28),
**characterized in that** the steam inlet port arrangement (16) is separated from the hydrocarbon evaporation device (24, 28) and is formed in a wall region (18) surrounding the mixing chamber (14), and **in that** the first heating device (28) can be operated electrically.

2. Evaporator arrangement according to Claim 1, **characterized in that** the hydrocarbon evaporation device (24, 28) is arranged in a bottom region (22) of the mixing chamber (14).

3. Evaporator arrangement according to either one of Claims 1 and 2, **characterized by** a second heating device for the heating of a wall surrounding the mixing chamber (14) and/or of a wall adjoining the mixing chamber (14) in the direction of flow.

4. Evaporator arrangement according to Claim 3, **characterized in that** the second heating device comprises a heat exchanger arrangement through which heated fluid can flow and/or an electrically operable heating element.

5. Evaporator arrangement according to one of Claims 1 to 4, **characterized in that** the steam generation arrangement (32, R, 36, 38, 40) comprises a heat source (36, 32, R) and a heat exchanger arrangement (38, 40) for the transmission of heat from the heat source (36, 32, R) to water to be evaporated.

6. Evaporator arrangement according to Claim 5, **characterized in that** the heat source comprises a burner arrangement (36).

7. Evaporator arrangement according to Claim 6, **characterized in that** the burner arrangement (36) is designed for reception and combustion of exhaust gases (A) leaving a fuel cell (34) and containing residual hydrogen and/or of liquid or gaseous fuel.

8. Reformer system for the production of hydrogen from a hydrocarbon/steam mixture, comprising an evaporator arrangement according to one of Claims 1 to 7.

9. Reformer system according to Claim 8, **characterized in that** a heating arrangement (36) designed for preheating a reformer (32) and/or a fuel cell (34) is provided.

10. Reformer system according to Claim 9, **characterized in that** the heating arrangement (36) comprises the burner arrangement (36), and the heat source comprises a burner arrangement (36).

11. Reformer system according to Claim 9, **characterized in that** the heating arrangement (36) comprises the burner arrangement (36), and **in that** the burner arrangement (36) is designed for the reception and combustion of exhaust gases (A) leaving a fuel cell (34) and containing residual hydrogen and/or of liquid or gaseous fuel.

## Revendications

1. Dispositif évaporateur destiné à générer un mélange d'hydrocarbone/vapeur d'eau décomposé dans un reformeur pour la production d'hydrogène, comprenant une zone d'évaporateur, laquelle présente :
- un dispositif de production de vapeur d'eau (32, R, 36, 38, 40),
- une chambre de mélange (14) dotée d'un dispositif d'ouverture d'entrée de vapeur d'eau (16),
- un dispositif d'évaporation d'hydrocarbone (24, 28), comprenant un milieu d'évaporateur poreux (24) et, attribué à celui-ci, un premier dispositif de chauffage (28),
**caractérisé en ce que** le dispositif d'ouverture d'entrée de vapeur d'eau (16) est conçu séparément du dispositif d'évaporation d'hydrocarbone (24, 28) dans une zone de paroi (18) entourant la chambre de mélange (14) et **en ce que** le premier dispositif de chauffage (28) peut être exploité électriquement.

2. Dispositif évaporateur selon la revendication 1, **caractérisé en ce que** le dispositif d'évaporation d'hydrocarbone (24, 28) est disposé dans une zone de fond (22) de la chambre de mélange (14).

3. Dispositif évaporateur selon l'une des revendications 1 et 2,
**caractérisé par** un second dispositif de chauffage pour le réchauffement d'une paroi entourant la chambre de mélange (14) et/ou d'une paroi se raccordant dans le sens d'écoulement à la chambre de mélange (14).

4. Dispositif évaporateur selon la revendication 3,
**caractérisé en ce que** le second dispositif de chauffage comprend un dispositif échangeur de chaleur pouvant être traversé par du fluide réchauffé et/ou par un élément de chauffage exploitable électriquement.

5. Dispositif évaporateur selon l'une des revendications 1 à 4,
**caractérisé en ce que** le dispositif de production de vapeur d'eau (32, R, 36, 38, 40) comprend une source de chaleur (36, 32, R) et un dispositif échangeur de chaleur (38, 40) pour la transmission de chaleur de la source de chaleur (36, 32, R) à l'eau à évaporer.

6. Dispositif évaporateur selon la revendication 5,
**caractérisé en ce que** la source de chaleur comprend un agencement de brûleur (36).

7. Dispositif évaporateur selon la revendication 6, **caractérisé en ce que** le dispositif de brûleur (36) est conçu pour la réception et la combustion de gaz brûlés (A) quittant une cellule de combustible (34) et contenant de l'hydrogène résiduel et/ou de combustible liquide ou gazeux.

8. Système reformeur destiné à l'obtention d'hydrogène à partir d'un mélange d'hydrocarbone/vapeur d'eau, comprenant un dispositif évaporateur selon l'une des revendications 1 à 7.

9. Système reformeur selon la revendication 8,
**caractérisé en ce qu'**un dispositif de chauffage (36) conçu pour le préchauffage d'un reformeur (32) et/ou d'une cellule de combustible (34) est prévu.

10. Système reformeur selon la revendication 9,
**caractérisé en ce que** le dispositif de chauffage (36) comprend l'agencement de brûleur (36) et la source de chaleur comprend un agencement de brûleur (36).

11. Système reformeur selon la revendication 9,
**caractérisé en ce que** le dispositif de chauffage (36) comprend l'agencement de brûleur (36) et **en ce que** l'agencement de brûleur (36) est conçu pour la réception et la combustion de gaz brûlés (A) quittant une cellule de combustible (34) et contenant de l'hydrogène résiduel et/ou du combustible liquide ou gazeux.
